# EUROPEAN PATENT SPECIFICATION

(11) **EP 2 807 591 B1**
(45) Date of publication and mention of the grant of the patent: **26.09.2018**
(21) Application number: 13746852.6
(22) Date of filing: 21.01.2013
(51) Int. Cl.: H04W 4/20, H04L 12/28, H04L 12/26

(54) **A METHOD AND SYSTEM FOR MONITORING THE HEALTH STATUS OF ELECTRONIC APPLIANCES**
VERFAHREN UND SYSTEM ZUR ÜBERWACHUNG DES GESUNDHEITSZUSTANDES VON ELEKTRONISCHEN VORRICHTUNGEN
PROCÉDÉ ET SYSTÈME PERMETTANT DE SURVEILLER L'ÉTAT D'APPAREILS ÉLECTRONIQUES

(30) Priority: 23.01.2012 IN 222MU2012
(43) Date of publication of application: 03.12.2014
(73) Proprietor: Tata Consultancy Services Limited, Mumbai 400 021 (IN)
(72) Inventor: KOLAY, Subrata, Kolkata 700091 West Bengal (IN); DASGUPTA, Ranjan, Kolkata 700091 West Bengal (IN); PAL, Arpan, Kolkata 700091 West Bengal (IN)
(74) Representative: Potter Clarkson LLP
(86) International application number: PCT/IN2013/000042
(87) International publication number: WO 2013/118142

(56) References cited:
- US-A1- 2001 025 349
- US-A1- 2002 032 491
- US-A1- 2002 128 728
- US-A1- 2005 203 647
- US-A1- 2011 082 599
- US-A1- 2011 202 293
- US-A1- 2012 016 608

## Description

### FIELD OF THE INVENTION

The present invention relates to effective management of energy consumption. Particularly the invention provides a method and system for reporting and monitoring health status of electronic appliances.

### BACKGROUND OF THE INVENTION

Technological developments in household consumer electronic appliances have given unlimited options to consumers to choose from and on the other hand increasing electricity prices have brought consumer's focus on optimizing energy consumption by these household electronic appliances. In current scenario, a typical house may have number of household electronic appliances such as air conditioner, washing machine, refrigerator and electric tea-coffee kettle etc. and consuming significant amount of electricity in cumulative manner.

When the electronic appliances are newly installed they consume electricity according to their rated specifications. Eventually, electronic appliance's condition may degrade and the electricity consumption may tend to increase or decrease. Such variation in electricity consumption affects overall performance of the said electronic appliances as well as user experience. At some point of time, some part of the appliance or the whole appliance may blow up or it might blow up the MCV suddenly. This sudden damage may hamper the daily activity of users. In case of higher consumption of electricity than the rated consumption, the user has to pay more for the additional electricity consumption. Eventually user may require help of customer care of appliance manufacturer for getting the problem solved and may end up in wasting time and paying for service charges.

For the existing consumer electronic appliance market there is no solution available to understand, monitor and diagnose the health status of the electronic using transient and steady current consumptions of the said electronic appliances. There is no solution that may be used to detect any potential fault in one or more components of the electronic appliance and suggest remedial replacement of one or more components of the electronic appliance before the electronic appliance actually stops functioning.

To report and monitor health status of the electronic appliances, there is a need to devise a solution which can sample transient and steady current consumptions signature of the said appliances for reporting and monitoring health status of said electronic appliances. Some of the existing method and systems known to us are as follows:
US20100076615 by Daniel et al. provides a systems and methods for distribution and provision of electricity supply at appropriate voltages, monitoring and usage by end devices, and to facilitating consumers in changing their energy usage behavior, and to adopt and easily install appropriate sustainable, energy efficient or renewable technologies.

US 20100191487 by Rada et al. provides devices and methods for identifying an electrical device, and its state, in a network of electrical devices.

US 20110051823 by Imes et al. provides an energy management apparatus for a home energy management system and method includes a processor operable to manage energy use at a site.

US20110046805 by Bedros et al. provides a context-aware smart home energy management (CASHEM) system and method for dynamically scheduling household energy use to reduce energy consumption by identifying contextual information within said household.

Han et al. in "Design and implementation of smart home energy management systems based on zigbee" discloses about a new Smart Home Energy Management System (SHEMS) based on an IEEE802.15.4 and ZigBee known as a "ZigBee sensor network".

Freescale published in "Home Energy Management Systems" about home energy management systems interfacing between the utility-controlled smart grid and energy-consuming in-house objects.

Abe et al. in "Development and evaluation of smart tap type Home Energy Management System using sensor networks" discloses about a construction technology for a Smart Tap Home Energy Management System (HEMS) that can make the energy consumption of living environment information and the consumer electronics visible using Wireless Sensor Networks (ZigBee).

ZigBee Alliance published in "ZigBee Smart Energy Certified Products" about the SafePlug 1202 electrical outlet providing two independently controlled receptacles involved in Power (energy) monitoring, Line voltage monitoring, On/off control, Demand Response (DR) control, DR verification, Appliance tracking, Fire and shock protection, and Cold load start smoothing. The Onzo Energy Display helps utilities build valuable relationships with their customers by deriving insight from energy use data.

US 2011/202293 discloses a system and method for performing diagnostics on a device, such as an appliance, using a sub-meter device that measures power characteristics related to usage of the appliance within a HEM network and provides such data to a home energy controller or the like.

US 2001/025349 discloses a device which monitors an appliance that receives power from a source. The device includes a first coupler that couples the device to the power source. A second coupler couples the device to the appliance. A monitoring circuit is connected to the first coupler and the second coupler to monitor power supplied by the source to the appliance. A communications circuit also is provided. The monitoring circuit provides data based on the monitored power to the communications circuit for output to the first coupler. The communications circuit may include a receiver that receives a signal from the first coupler to control the monitoring circuit. The communications circuit also may include a transceiver that receives a signal from the first coupler to control the monitoring circuit and to transmit monitored power data.

The above mentioned prior arts fail to disclose an efficient method and system for reporting and monitoring health status of electronic appliances. The existing prior art also failed to disclose method and system for sampling transient and steady current consumptions signature of the said appliances for reporting and monitoring health status of said electronic appliances.

Thus, in the light of the above mentioned background art, it is evident that, there is a need for a solution that can report and monitor health status of electronic appliances by sampling transient and steady current consumptions signature of the said appliances.

### OBJECTIVES OF THE INVENTION

In accordance with the present invention, the primary objective is to provide a method and system for reporting and monitoring health status of electronic appliances.

Another objective of the invention is to provide a method and system for reporting and monitoring the health status of electronic appliances communicatively coupled with a home energy gateway over a dedicated local area network using communication protocols selected from the group comprising of zigbee, NFCs and Bluetooth, by sampling transient and steady current consumptions signature of the said appliances.

Another objective of the invention is to provide a method and system for registering electronic appliances with a diagnostic server by providing predefined electrical parameters of said electronic appliance, using a widget based graphical user interface through the home energy gateway. Another objective of the invention is to provide a method and system for sampling transient and steady current signature of the electronic appliance by the home energy gateway.

Another objective of the invention is to provide a method and system for sampling transient and steady current signature of the electronic appliance by the home energy gateway.

Another objective of the invention is to provide a method and system for uploading sampled transient and steady current signature of the electronic appliance to a diagnostic server by said home energy gateway over internet, particularly over a cloud network, wherein the transient current signature are sampled and uploaded to the diagnostic server every time the electronic appliance turns on and the steady current signature are sampled and uploaded to the diagnostic server at periodic user defined time interval.

Another objective of the invention is to provide a method and system for analyzing the uploaded transient and steady current signature of the electronic appliance and diagnosing health status of said electronic appliance based on the analysed transient and steady current signature of the electronic appliance by an analytical engine running on the diagnostic server.

Another objective of the invention is to provide a method and system for reporting diagnosed health status of the electronic appliances to a user on a display device including an in home display device such as television communicatively coupled with the home energy gateway or on user's mobile communication device including a smart phone, a laptop, a tablet personal computer or Internet of Things (IOT) devices using internet, particularly a web portal.

Another objective of the invention is to provide a method and system for generating and sending SMS, email to the user regarding the health status of the electronic appliance automatically.

### SUMMARY OF THE INVENTION

Before the present methods, systems, and hardware enablement are described, it is to be understood that this invention in not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention.

The present invention provides a method and system for reporting and monitoring health status of electronic appliances.

In an embodiment of the invention a method and system is provided for reporting and monitoring the health status of electronic appliances communicatively coupled with a home energy gateway over a dedicated local area network using communication protocols selected from the group comprising of zigbee, NFCs and Bluetooth, by sampling transient and steady current consumptions signature of the said appliances.

In an embodiment of the invention a method and system is provided for registering electronic appliances with a diagnostic server by providing predefined electrical parameters of said electronic appliance, using internet, particularly a widget based graphical user interface of a web portal through the home energy gateway.

In an embodiment of the invention a method and system is provided for sampling transient and steady current signature of the electronic appliance by the home energy gateway.

In an embodiment of the invention a method and system is provided for uploading sampled transient and steady current signature of the electronic appliance to a diagnostic server by said home energy gateway over internet, particularly over a cloud network.

In an embodiment of the invention a method and system is provided for analyzing the uploaded transient and steady current signature of the electronic appliance and diagnosing health status of said electronic appliance based on the analysed transient and steady current signature of the electronic appliance by an analytical engine running on the diagnostic server.

In an embodiment of the invention a method and system is provided for reporting diagnosed health status of the electronic appliances to a user on a display device including an in home display device such as television communicatively coupled with the home energy gateway or on a user's mobile communication device including a smart phone, a laptop, a tablet personal computer or IOT device using internet, particularly a web portal.

In an embodiment of the invention a method and system is provided for generating and sending SMS, email to the user regarding the health status of the electronic appliance automatically.

In an embodiment of the invention a system is provided for reporting and monitoring health status of a plurality of electronic appliances, the system comprising of a home energy gateway; a diagnostic server; and a display device.

The above said method and system are preferably for reporting and monitoring the health status of electronic appliances but also can be used for many other applications.

### BRIEF DESCRIPTION OF THE DRAWINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
**Figure 1****:** shows a flow diagram of the process for reporting and monitoring health status of electronic appliances.
**Figure 2****:** shows a block diagram of the process for reporting and monitoring health status of electronic appliances.
**Figure 3****:** shows a call flow diagram of the process for reporting and monitoring health status of electronic appliances.

### DETAILED DESCRIPTION OF THE INVENTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The present application provides a method for reporting and monitoring health status of a plurality of electronic appliance, wherein said plurality of electronic appliance are communicatively coupled with a home energy gateway (218) over a local area network (**210**), said method comprises steps of:
a. registering at least one electronic appliance out of the plurality of electronic appliance with a diagnostic server (**222**) by providing predefined electrical parameters of said electronic appliance, using a widget based graphical user interface through said home energy gateway (**218**);
b. sampling transient and steady current signature of the said electronic appliance by the home energy gateway (**218**) and uploading said sampled transient and steady current signature of the said electronic appliance to the diagnostic server (**222**) by said home energy gateway (**218**) over internet;
c. analyzing the uploaded transient and steady current signature of the said electronic appliance and diagnosing health status of said electronic appliance based on the analysed transient and steady current signature of the said electronic appliance by the diagnostic server (**222**); and
d. reporting diagnosed health status of said electronic appliances to a user on a display device by the diagnostic server (**222**) over internet.

The present application provides a system for reporting and monitoring health status of a plurality of electronic appliance, the system comprising of:
a. a home energy gateway (**218**) adapted to facilitate registration of at least one electronic appliance out of the plurality of electronic appliance with a diagnostic server (**222**) by providing predefined electrical parameters of said electronic appliance, using a widget based graphical user interface of said home energy gateway (**218**); sample transient and steady current signature of the said electronic appliance and uploading said sampled transient and steady current signature of the said electronic appliance to the diagnostic server (**222**) over the internet;
b. a diagnostic server (**222**) adapted to analyze the uploaded transient and steady current signature of the said electronic appliance for diagnosing and reporting health status of said electronic appliance based on the analysed transient and steady current signature of the said electronic appliance; and
c. a display device adapted to display the diagnosed health status of said electronic appliances and fetched contact details of service center of the said electronic appliances to a user.

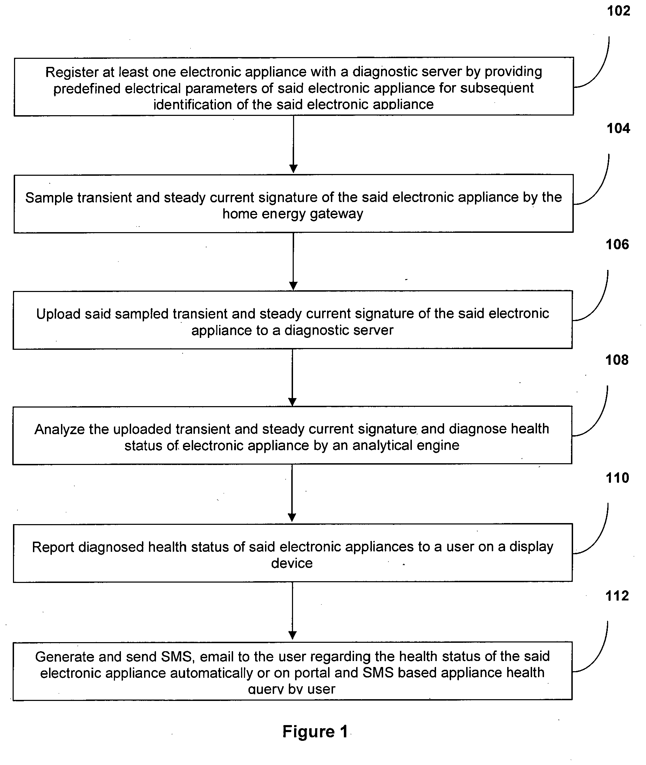

Referring to **Figure 1** is a flow diagram of the process reporting and monitoring health status of electronic appliances.

The process starts at the step **102,** at least one electronic appliance is registered with a diagnostic server by providing predefined electrical parameters of said electronic appliance for subsequent identification of the said electronic appliance. At the step **104,** transient and steady current signature of the said electronic appliance is sampled by the home energy gateway. At the step **106,** said sampled transient and steady current signature of the said electronic appliance are uploaded to a diagnostic server. At the step **108,** the uploaded transient and steady current signature are analysed and diagnosing health status of said electronic appliance by an analytical engine. At the step **110,** diagnosed health status of said electronic appliances is reported to a user on a display device..The process ends at the step **112,** SMS, email are generated and sent to the user regarding the health status of the said electronic appliance automatically or on portal and SMS based appliance health query by user.

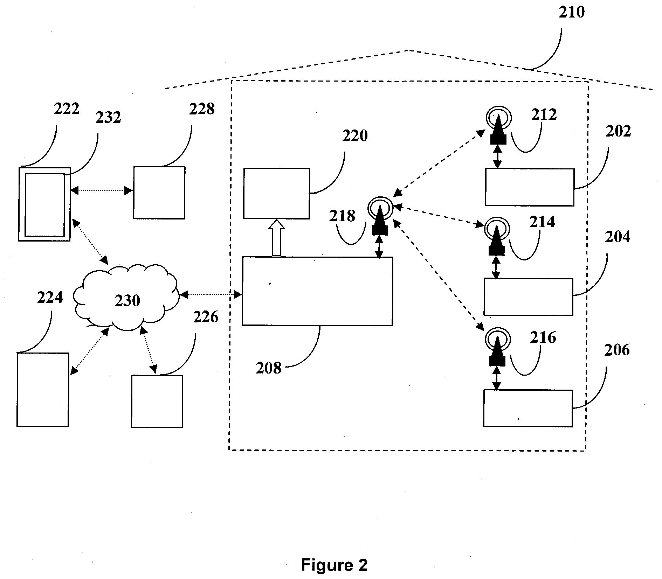

Referring to **Figure 2** is a block diagram of the process for reporting and monitoring health status of electronic appliances.

In a specific embodiment of the invention, the system is provided for reporting and monitoring health status of electronic appliances, wherein the said electronic appliance are communicatively coupled with a home energy gateway (**218**) over a dedicated local area network (**210**), using zigbee communication protocol, the system comprises of an Air conditioner (**202**), a Washing machine (**204**), a Refrigerator (**206**), a Zigbee end device of Air conditioner (**212**), a Zigbee end device of Washing machine (**214**), a Zigbee end device of Refrigerator (**216**), a Zigbee coordinator of Home energy gateway (**218**), a Local area network (**210**), an In home display device (**220**), a Diagnostic server (**222**), a Yellow page server (**224**), a web portal (**226**), a Mobile communication device (**228**), Cloud network (**230**) and a database.

In an embodiment of the invention, the said electronic appliances an Air conditioner (**202**), a Washing machine (**204**), a Refrigerator (**206**) are communicatively coupled with Home energy gateway (**208**) using Zigbee protocol over the Local area network (**210**) in order to retrofit the existing said appliances. The said electronic appliances are acting as zigbee end device such as the Zigbee end device of Air conditioner (**212**), the Zigbee end device of Washing machine (**214**), the Zigbee end device of Refrigerator (**216**), and Home energy gateway (**218**) is acting as zigbee coordinator such as the Zigbee coordinator of Home energy gateway (**218**).

In an embodiment of the invention, at least one electronic appliance out of the plurality of electronic appliances is registered with the diagnostic server (**222**) by providing predefined electrical parameters of said electronic appliance, using internet, particularly a widget based graphical user interface of a web portal (**226**) through said home energy gateway (**218**). The predefined electrical parameters of said electronic appliance are selected form the group comprising of electric current and voltage rating and are stored in the database connected with the diagnostic server (**222**). Upon providing the predefined electrical parameters of said electronic appliance such as electric current and voltage rating the home energy gateway (218) registers the said electronic appliances to the Diagnostic server (**222**) during the registration process.

In an embodiment of the invention, the system intelligently identifies commonly used household electronic appliances while registering said electronic appliance to make the registration process easy. The identification is done by pre-storing transient current signature for commonly used household electronic appliances as a reference in a database connected with the diagnostic server (**222**) for identifying the said electronic appliance intelligently while registering said electronic appliance. While registering a new household electronic appliance, the pre-stored transient current signatures for commonly used household electronic appliances on the home energy gateway (**218**) are searched and located, if it is not located locally then the Diagnostic server (**222**) is being contacted to retrieve the information pertaining to the transient current signatures for the new household electronic appliance.

In an embodiment of the invention, transient and steady current signature of the said electronic appliance is sampled by the home energy gateway (**218**) using zigbee communication protocol and further said sampled transient and steady current signature of the said electronic appliance are uploaded to the diagnostic server (**222**) by said home energy gateway (**218**) over the internet, particularly over the cloud network (**230**).

The registered electronic appliances are continuously scanned by the home energy gateway (**218**) over the zigbee communication protocol and the home energy gateway (**218**) is notified upon turning on any of the registered electronic appliance for sampling transient and steady current signature. Once any of the said registered electronic appliances is turned on, the home energy gateway (**218**) start sampling transient current signature of the said electronic appliance and the sampled transient current signature of the said electronic appliance is sent or uploaded to the diagnostic server (**222**) for further analysis every time the said electronic appliance is turned on. The transient current signature of the said electronic appliance is sampled by the home energy gateway (**218**) upon turning on the said electronic appliance at high frequency to determine the subtle deviation of the said electronic appliance's characteristics. This sampling rate is in the range of several kHz to determine the subtle deviation of the electronic appliance's characteristics. The sampled transient current signature of the said electronic appliance is further stored in the database connected to the diagnostic server (**222**). During the steady state the home energy gateway (**218**) sample steady current signature at periodic user defined time interval to collect the steady current signature and the steady current signature are uploaded to the Diagnostic server (**222**) at periodic user defined time interval for further analysis.

In an embodiment of the invention, the uploaded transient and steady current signature of the said electronic appliance are analysed and health status of said electronic appliance is diagnosed based on the analysed transient and steady current signature of the said electronic appliance by the analytical engine (**232**) running on the diagnostic server (**222**).

The analytical engine (**232**) running on the diagnostic server (**222**) check the uploaded transient and steady current signature of the said electronic appliance periodically. The analytical engine (**232**) running on the diagnostic server (**222**) compares the said uploaded transient and steady current signature of the said electronic appliance with the predefined electrical parameters of said electronic appliance received as a reference electrical parameters of said electronic appliance while registering said electronic appliance. If there is any tolerable anomaly found in the transient or steady current signature of the said electronic appliance, the problem is diagnosed based on the rule engine sets available with analytical engine (**232**) running on the diagnostic server (**222**). Further, in case of failure of the rule engine sets available with analytical engine (**232**), it may fetch diagnostics or analysis report for the said electronic appliances from the internet.

In an embodiment of the invention, the diagnosed health status of said electronic appliances is reported to the user on the display device including an in home display device (**220**) such as television communicatively coupled with the home energy gateway (**218**) by the diagnostic server (**222**) or on the user's mobile communication device (**228**) communicatively coupled with the home energy gateway (**218**) using internet, particularly the web portal (**226**), wherein the user's mobile communication device (**228**) selected from the group comprising of a smart phone, a laptop, a tablet personal computer and IOT devices. The diagnostic server (**222**) reports the diagnosed health status of said electronic appliances home energy gateway (**218**) by sending on screen alert message for user's perusal in case an immediate attention of the user is required. The health status of said electronic appliance may comprise of information pertaining to tolerable anomaly in the transient or steady current signature. The fetched diagnostics or analysis report for the said electronic appliances from the internet in case of failure of the analytical engine (**232**) running on the diagnostic server (**222**) are also reported to the user on the display device including in home display device (**220**) such as television communicatively coupled with the home energy gateway (**218**) or on the user's mobile communication device (**228**) communicatively coupled with the home energy gateway (**218**) using internet, particularly the web portal (**226**), wherein the user's mobile communication device (**228**) is selected from the group comprising of a smart phone, a laptop, a tablet personal computer and IOT device.

In an embodiment of the invention, the diagnostic server (**222**) is having a SMS gateway connectivity adapted to automatically generating and sending SMS the said diagnosed health status of said electronic appliance as response on the user's Mobile communication device (228) depending on the severity of the diagnosed health status report of said electronic appliance. The user's Mobile communication device (**228**) may be a smart phone, a laptop or a tablet personal computer. The Diagnostic server (**222**) is further generates and send electronic mail to the user regarding the health status of the said appliances automatically. The user is enabled to view the said diagnosed health status of said electronic appliance through internet, particularly the web portal (**226**).

In an embodiment of the invention, the diagnostic server (**222**) further connects to Yellow page server (**224**) over internet, particularly over the cloud network (**230**) for fetching the service center contact details of the said electronic appliances in case of issues and details are then pushed to the home energy gateway (**218**) for displaying on the display device including in home display device (**220**) such as television or on the user's Mobile communication device (**228**) such as smart phone, laptop, tablet personal computer or a IOT device using internet, particularly the web portal (**226**).

In an embodiment of the invention, the user is enabled to send a request using user's mobile communication device (**228**) to the diagnostic server (**222**) and know about the current health status of said electronic appliance at any given point of time. The user request is authenticated upon communicating user's mobile communication device's number to the diagnostic server (**222**). Upon receiving user request, the analytical engine (**232**) running on the diagnostic server (**222**) analyses and diagnose the current consumption rating and specified rating of the said electronic appliance and report the diagnosed health status of said electronic appliances to user's mobile communication device (**228**) at any point of time, anywhere.

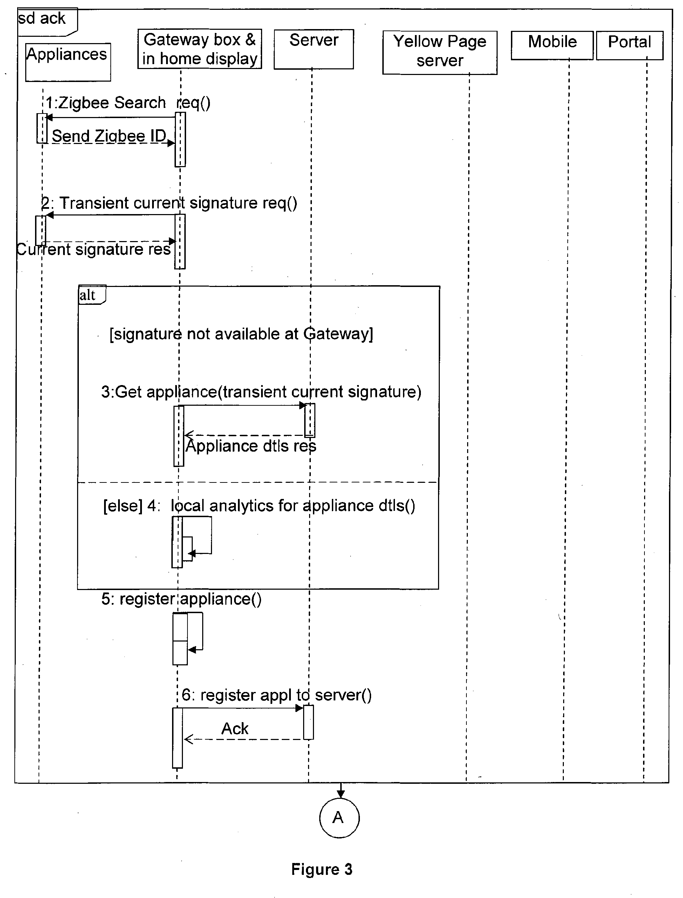

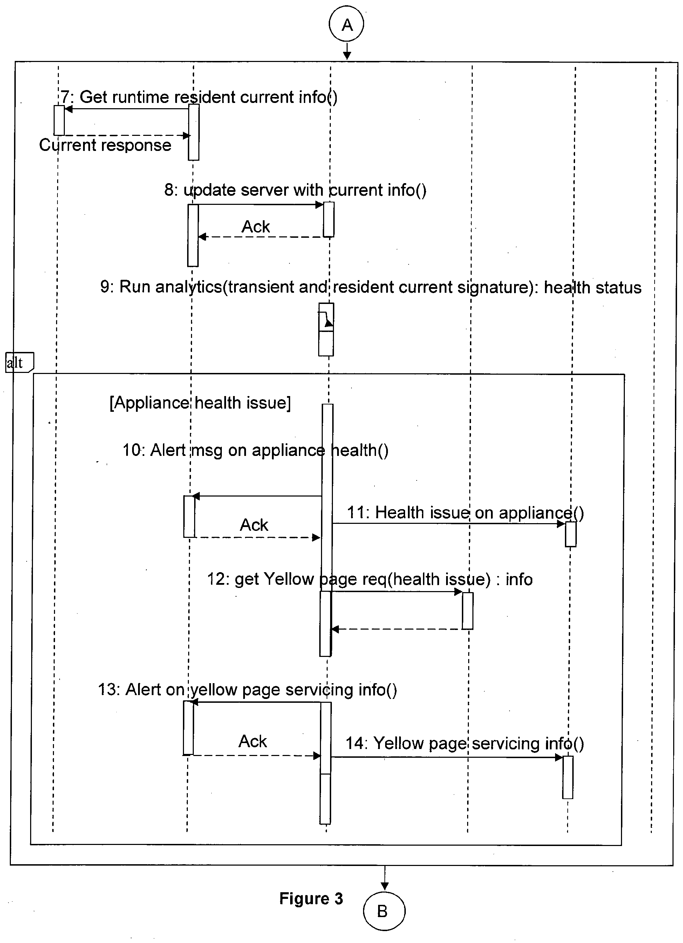

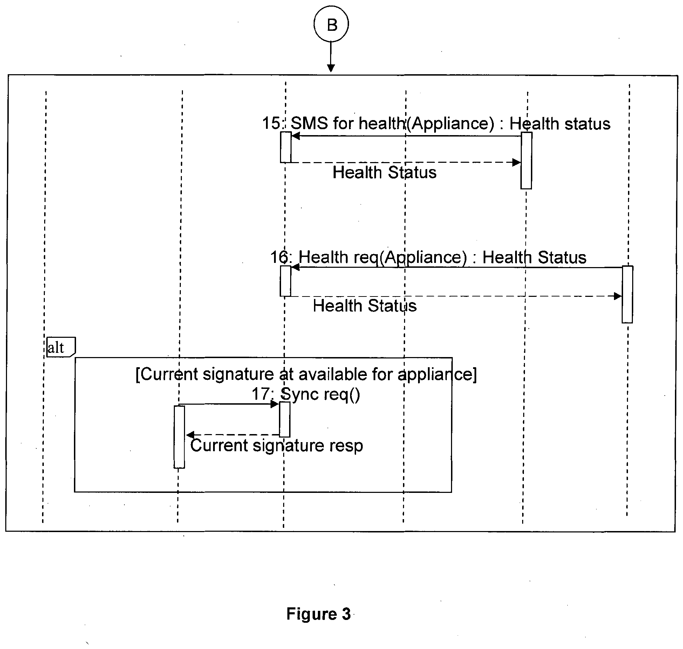

Referring to the **Figure 3** is a call flow diagram of the process for reporting and monitoring health status of electronic appliances.

In an embodiment of the invention the plurality of electronic appliances communicates with the home energy information gateway using Zigbee communication protocol. The display device including in home display device, such as the television (**220**) and user's mobile communication device (**228**) such as a smart phone, a laptop, a tablet personal computer or IOT device are attached to the home energy information gateway. The home energy gateway (**218**) samples transient current signature of the said electronic appliance when the said electronic appliance turn on and the home energy gateway (2**1**8) matches the sampled transient current signature of the said electronic appliance with its stored transient current signature. If the sampled transient current signature of the said electronic appliance does not matches with its stored transient current signature, the transient current signature of the said electronic appliance is sent to the diagnostic server (**222**) to know the appliance category details. If the sampled transient current signature of the said electronic appliance matches with its stored transient current signature at the home energy gateway (**218**), the analytical engine (**232**) running on the diagnostic server (**222**) to find out list of possible appliances details. The user registers the electronic appliance by selecting proper appliance from the list of possible appliances list along with updating the diagnostic server (**222**) about the newly register appliance. While registering a new household electronic appliance, the pre-stored transient current signatures for commonly used household electronic appliances on the home energy gateway (**218**) are searched and located, if it is not located locally then the Diagnostic server (**222**) is being contacted to retrieve the information pertaining to the transient current signatures for the new household electronic appliance. The home energy gateway (**218**) sample resident current signature from each of the registered appliance and update the diagnostic server (**222**). The analytical engine (**232**) running on the diagnostic server (**222**) analyses transient and resident current signature to find out any possible health issues. If any health issue arises the user is informed through the home energy gateway (**218**) as an alert message on the display device including in home display device (**220**) or on user's mobile communication device (**228**). A yellow page server (**224**) is connected and the possible servicing details information is collected from the yellow page server (**224**) and the same is sent back to the user through the home energy gateway (**218**). The diagnostic server (**222**) also sends the alert message to the user's mobile communication device (**228**) registered with the diagnostic server (**222**). The user is also enabled to send a request using user's mobile communication device (**228**) to the diagnostic server (**222**) for current health status of said electronic appliance at any given point of time. The home energy gateway (**218**) synchronizes with the diagnostic server (**222**) current signature, wherein the diagnostic server (**222**) updates the home energy gateway (**218**) with appliances current signature.

The machine may comprise a server computer, a client user computer, a personal computer (PC), a tablet PC, a laptop computer, a desktop computer, a control system, a network router, switch or bridge, or any machine capable of executing a set of instructions (sequential or otherwise) that specify actions to be taken by that machine. Further, while a single machine is illustrated, the term "machine" shall also be taken to include any collection of machines that individually or jointly execute a set (or multiple sets) of instructions to perform any one or more of the methodologies discussed herein.

The machine may include a processor (e.g., a central processing unit (CPU), a graphics processing unit (GPU, or both), a main memory and a static memory, which communicate with each other via a bus. The machine may further include a video display unit (e.g., a liquid crystal displays (LCD), a flat panel, a solid state display, or a cathode ray tube (CRT)). The machine may include an input device (e.g., a keyboard) or touch-sensitive screen, a cursor control device (e.g., a mouse), a disk drive unit, a signal generation device (e.g., a speaker or remote control) and a network interface device.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

The illustrations of arrangements described herein are intended to provide a general understanding of the structure of various embodiments, and they are not intended to serve as a complete description of all the elements and features of apparatus and systems that might make use of the structures described herein. Many other arrangements will be apparent to those of skill in the art upon reviewing the above description. Other arrangements may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

The preceding description has been presented with reference to various embodiments. Persons skilled in the art and technology to which this application pertains will appreciate that alterations and changes in the described structures and methods of operation can be practiced without meaningfully departing from the scope.

### ADVANTAGES OF THE INVENTION

- The present invention enables appliance health status monitoring on television/ mobile communication devices/ personal computers
- The present invention enables appliance identification
- The present invention enables intelligent appliance servicing assistance

## Claims

1. A method for monitoring health status of a plurality of electronic appliances, , the method comprising:
registering at least one electronic appliance of a plurality of electronic appliances by providing predefined electrical parameters of the at least one electronic appliance through a home energy gateway (218); **characterised by** sampling a transient current signature of the at least one electronic appliance when the at least one electronic appliance is turned on at high frequency to determine subtle deviation of the at least one electronic appliance's characteristic;
sampling a steady current signature of the at least one electronic appliance by the home energy gateway (218) when the at least one electronic appliance is in a steady state of functioning ; and
analyzing the transient current signature and the steady current signature of the at least one electronic appliance by comparing with the predefined electric parameters of the at least one electronic appliance to find an anomaly in the at least one transient current signature and steady current signature if any to diagnose a health status of the at least one electronic appliance based on the anomaly of the transient current signature and the steady current signature so detected.

2. The method as claimed in claim 1, further comprising:
registering the at least one electronic appliance with a diagnostic server (222),
uploading the transient current signature and the steady current signature of the at least one electronic appliance to the diagnostic server (222) by the home energy gateway (218); and
analyzing the at least one transient current signature and the steady current signature of the at least one electronic appliance to diagnose health status of said electronic appliance based on the analysis of the transient and the steady current signature by an analytical engine (232) running on the diagnostic server (222).

3. The method as claimed in claim 2, wherein the at least one transient current signature and the steady current signature of the at least one electronic appliance is pre-stored as a reference in a database connected with the diagnostic server (222) for identifying the at least one electronic appliance intelligently while registering said at least one electronic appliance.

4. The method as claimed in claim 3, further comprising searching and locating the at least one pre-stored transient and steady current signature of the at least one electronic appliance on the home energy gateway (218) for identifying a new electronic appliance of the at least one electronic appliance intelligently while registering said new electronic appliance.

5. The method as claimed in claim 4, further comprising contacting the diagnostic server (222) to retrieve information pertaining to the at least one transient and steady current signature for the new electronic appliance when the at least one transient and steady current signature for the at least one electronic appliance is not located on the home energy gateway (218).

6. The method as claimed in claim 1, wherein the predefined electrical parameters of said at least one electronic appliance further comprises at least one of electric current and voltage rating.

7. The method as claimed in claim 1, wherein the registered at least on electronic appliance is continuously scanned by the home energy gateway, wherein the home energy gateway (218) is notified upon turning on the at least one electronic appliance for sampling the at least one transient current signature and the steady current signature of the at least one electronic appliance and sampling the steady current signature of the at least one electronic appliance at periodic time interval.

8. The method as claimed in claim 1, further comprising reporting a diagnosed health status of the at least one electronic appliance on a display device.

9. The method as claimed in claim2, wherein the uploaded at least one transient and steady current signature of the at least one electronic appliance is analyzed by comparing the uploaded at least one transient and steady current signature of the electronic appliance with the predefined electrical parameters of said at least one electronic appliance.

10. The method as claimed in claim2, further comprising fetching contact details of service center of the electronic appliances by the diagnostic server (222) by connecting to a yellow page server (224) over the Internet and pushing the fetched contact details to the home energy gateway (218) for further displaying on the display device.

11. The method as claimed in claim 1, further comprising generating and sending SMS or email to the user the diagnosed health status of the electronic appliance.

12. The method as claimed in claim2, further comprising sending a request from a mobile communication device of the user (228) to the diagnostic server (222) for a current health status of said at least one electronic appliance.

13. A system for monitoring a health status of a plurality of electronic appliances, the system comprising of:
a home energy gateway (218) adapted to,
facilitate registration of at least one electronic appliance of the plurality of electronic appliances with a diagnostic server (222), by providing predefined electrical parameters of the at least one electronic appliance;
**characterised in** being adapted to sample a transient current signature of the at least one electronic appliance when the at least one electronic appliance is turned on at high frequency to determine subtle deviation of the at least one electronic appliance's characteristic;
sample a steady current signature of the at least one electronic appliance when the at least one electronic appliance is in a steady state of functioning; and
analyze the transient current signature and the steady current signature of the at least one electronic appliance by comparing with predefined electric parameters of the at least one electronic appliance to find an anomaly in the at least one transient current signature and steady current signature if any to diagnose a health status of the at least one electronic appliance based on the anomaly so detected,.

14. The system as claimed in claim 13, wherein the system further comprises a display device adapted to display the health status of the at least one electronic appliance, wherein the display device comprises a television, a smart phone, a mobile phone, a laptop, a computer.

15. The system as claimed in claim 13, wherein the at least one electronic appliance further comprises an air conditioner (202), a washing machine (204), a refrigerator (206), a television, and a microwave.

## Patentansprüche

1. Verfahren zum Überwachen einer Funktionsfähigkeit mehrerer elektronischer Geräte, wobei das Verfahren umfasst:
Registrieren mindestens eines elektronischen Geräts von mehreren elektronischen Geräten durch Bereitstellen vordefinierter elektrischer Parameter des mindestens einen elektronischen Geräts durch ein Home Energy Gateway (218),
**gekennzeichnet durch**
Abtasten einer Ausgleichsstromsignatur des mindestens einen elektronischen Geräts, wenn das mindestens eine elektronische Gerät mit einer hohen Frequenz eingeschaltet wird, um eine geringe Abweichung des Verhaltens des mindestens einen elektronischen Geräts zu bestimmen;
Abtasten einer Dauerstromsignatur des mindestens einen elektronischen Geräts durch das Home Energy Gateway (218), wenn das mindestens eine elektronische Gerät in einem dauerhaften Funktionszustand ist; und
Analysieren der Ausgleichsstromsignatur und der Dauerstromsignatur des mindestens einen elektronischen Geräts durch Vergleichen mit den vorgegebenen elektrischen Parametern des mindestens einen elektronischen Geräts, um gegebenenfalls eine Anomalie in der mindestens einen Ausgleichsstromsignatur und der Dauerstromsignatur zu finden, um eine Funktionsfähigkeit des mindestens einen elektronischen Geräts auf Basis der so erfassten Anomalie der Ausgleichsstromsignatur und der Dauerstromsignatur zu diagnostizieren.

2. Verfahren nach Anspruch 1, ferner umfassend:
Registrieren des mindestens einen elektronischen Geräts an einem Diagnoseserver (222),
Hochladen der Ausgleichsstromsignatur und der Dauerstromsignatur des mindestens einen elektronischen Geräts in den Diagnoseserver (222) durch das Home Energy Gateway (218); und
Analysieren der mindestens einen Ausgleichsstromsignatur und der Dauerstromsignatur des mindestens einen elektronischen Geräts, um durch ein Analysemodul (232), das auf dem Diagnoseserver (222) ausgeführt wird, eine Funktionsfähigkeit des elektronischen Geräts auf Basis der Analyse der Ausgleichs- und der Dauerstromsignatur zu diagnostizieren.

3. Verfahren nach Anspruch 2, wobei die mindestens eine Ausgleichsstromsignatur und die Dauerstromsignatur des mindestens einen elektronischen Geräts vorab als Bezug in einer Datenbank gespeichert werden, die mit dem Diagnoseserver (222) verbunden ist, um das mindestens eine elektronische Gerät auf intelligente Weise zu erkennen, während das mindestens eine elektronische Gerät registriert wird.

4. Verfahren nach Anspruch 3, ferner das Suchen und das Lokalisieren der mindestens einen vorab gespeicherten Ausgleichs- und Dauerstromsignatur des mindestens einen elektronischen Geräts am Home Energy Gateway (218) umfassend, um ein neues elektronisches Gerät des mindestens einen elektronischen Geräts auf intelligente Weise zu identifizieren, während das neue elektronische Gerät registriert wird.

5. Verfahren nach Anspruch 4, ferner das Kontaktieren des Diagnoseservers (222) umfassend, um Informationen in Bezug auf die mindestens eine Ausgleichs- und Dauerstromsignatur für das neue elektronische Gerät abzurufen, wenn die mindestens eine Ausgleichs- und Dauerstromsignatur für das mindestens eine elektronische Gerät nicht auf dem Home Energy Gateway (218) liegt.

6. Verfahren nach Anspruch 1, wobei die vordefinierten elektrischen Parameter des mindestens einen elektronischen Geräts ferner einen Nennstrom und/oder eine Nennspannung umfassen.

7. Verfahren nach Anspruch 1, wobei das mindestens eine registrierte elektronische Gerät durch das Home Energy Gateway kontinuierlich abgetastet wird, wobei das Home Energy Gateway (218) benachrichtigt wird, sobald das mindestens eine elektronische Gerät eingeschaltet wird, um die mindestens eine Ausgleichsstromsignatur und die Dauerstromsignatur des mindestens einen elektronischen Geräts abzutasten und die Dauerstromsignatur des mindestens einen elektronischen Geräts in einem periodischen Zeitintervall abzutasten.

8. Verfahren nach Anspruch 1, ferner das Wiedergeben einer diagnostizierten Funktionsfähigkeit des mindestens einen elektronischen Geräts an einer Anzeigevorrichtung umfassend.

9. Verfahren nach Anspruch 2, wobei die hochgeladene mindestens eine Ausgleichs- und Dauerstromsignatur des mindestens einen elektronischen Geräts durch Vergleichen der hochgeladenen mindestens einen Ausgleichs- und Dauerstromsignatur des elektronischen Geräts mit den vordefinierten elektrischen Parametern des mindestens einen elektronischen Geräts analysiert wird.

10. Verfahren nach Anspruch 2, ferner das Abrufen von Kontaktdetails eines Dienstzentrums der elektronischen Geräte durch den Diagnoseserver (222) durch Verbinden mit einem Gelbe-Seiten-Server (224) über das Internet und Weitergeben der abgerufenen Kontaktdetails an das Home Energy Gateway (218) für eine weitere Anzeige auf der Anzeigevorrichtung umfassend.

11. Verfahren nach Anspruch 1, ferner das Erzeugen und Senden einer SMS oder einer E-Mail an den Nutzer der diagnostizierten Funktionsfähigkeit des elektronischen Geräts umfassend.

12. Verfahren nach Anspruch 2, ferner das Senden einer Anfrage nach einer aktuellen Funktionsfähigkeit des mindestens einen elektronischen Geräts von einer mobilen Kommunikationsvorrichtung des Nutzers (228) an den Diagnoseserver (222) umfassend.

13. System zum Überwachen einer Funktionsfähigkeit mehrerer elektronischer Geräte, wobei das System umfasst:
ein Home Energy Gateway (218), das ausgelegt ist zum
Ermöglichen einer Registrierung mindestens eines elektronischen Geräts von den mehreren elektronischen Geräten an einem Diagnoseserver (222) durch Bereitstellen vordefinierter elektrischer Parameter des mindestens einen elektronischen Geräts;
**dadurch gekennzeichnet, dass** es ausgelegt ist zum
Abtasten einer Ausgleichsstromsignatur des mindestens einen elektronischen Geräts, wenn das mindestens eine elektronische Gerät mit einer hohen Frequenz eingeschaltet wird, um eine geringe Abweichung des Verhaltens des mindestens einen elektronischen Geräts zu bestimmen;
Abtasten einer Dauerstromsignatur des mindestens einen elektronischen Geräts, wenn das mindestens eine elektronische Gerät in einem dauerhaften Funktionszustand ist; und
Analysieren der Ausgleichsstromsignatur und der Dauerstromsignatur des mindestens einen elektronischen Geräts durch Vergleichen mit vorgegebenen elektrischen Parametern des mindestens einen elektronischen Geräts, um gegebenenfalls eine Anomalie in der mindestens einen Ausgleichsstromsignatur und der Dauerstromsignatur zu finden, um eine Funktionsfähigkeit des mindestens einen elektronischen Geräts auf Basis der so erfassten Anomalie zu diagnostizieren.

14. System nach Anspruch 13, wobei das System ferner eine Anzeigevorrichtung umfasst, die dafür ausgelegt ist, die Funktionsfähigkeit des mindestens einen elektronischen Geräts anzuzeigen, wobei die Anzeigevorrichtung eine Fernsehgerät, ein Smartphone, ein Mobiltelefon, einen Laptop, einen Computer umfasst.

15. System nach Anspruch 13, wobei das mindestens eine elektronische Gerät ferner eine Klimaanlage (202), eine Waschmaschine (204), einen Kühlschrank (206), ein Fernsehgerät und eine Mikrowelle umfasst.

## Revendications

1. Procédé de surveillance de l'état de santé d'une pluralité d'appareils électroniques, le procédé comprenant les étapes suivantes :
enregistrer au moins un appareil électronique parmi une pluralité d'appareils électroniques par fourniture des paramètres électriques prédéfinis de l'au moins un appareil électronique par le biais d'une passerelle d'énergie domestique (218) ;
**caractérisé par** les étapes suivantes
échantillonner une signature actuelle transitoire de l'au moins un appareil électronique lorsque l'au moins un appareil électronique est en service à haute fréquence pour déterminer un écart subtil de la caractéristique de l'au moins un appareil électronique ;
échantillonner une signature actuelle stable de l'au moins un appareil électronique par le biais de la passerelle d'énergie domestique (218) lorsque ledit au moins un appareil électronique est en état de fonctionnement stable ; et
analyser la signature actuelle transitoire et la signature actuelle stable de l'au moins un appareil électronique par comparaison avec les paramètres électriques prédéfinis de l'au moins un appareil électronique pour trouver une anomalie dans l'au moins une signature actuelle transitoire et signature actuelle stable, le cas échéant pour diagnostiquer un état de santé de l'au moins un appareil électronique en fonction de l'anomalie de la signature actuelle transitoire et de la signature actuelle stable ainsi détectée.

2. Procédé selon la revendication 1, comprenant en outre les étapes suivantes :
enregistrer l'au moins un appareil électronique auprès d'un serveur de diagnostic (222),
télécharger la signature actuelle transitoire et la signature actuelle stable de l'au moins un appareil électronique vers le serveur de diagnostic (222) par le biais de la passerelle d'énergie domestique (218) ; et
analyser l'au moins une signature actuelle transitoire et la signature actuelle stable de l'au moins un appareil électronique pour diagnostiquer l'état de santé dudit appareil électronique sur la base de l'analyse de la signature actuelle transitoire et la signature actuelle stable au moyen d'un moteur analytique (232) fonctionnant sur le serveur de diagnostic (222).

3. Procédé selon la revendication 2, dans lequel l'au moins une signature actuelle transitoire et la signature actuelle stable de l'au moins un appareil électronique sont préenregistrées comme référence dans une base de données connectée au serveur de diagnostic (222) pour identifier l'au moins un appareil électronique de manière intelligente lors de l'enregistrement dudit au moins un appareil électronique.

4. Procédé selon la revendication 3, comprenant en outre la recherche et la localisation de l'au moins une signature actuelle transitoire et une signature actuelle stable préalablement mémorisées de l'au moins un appareil électronique sur la passerelle d'énergie domestique (218) pour identifier un nouvel appareil électronique de l'au moins un appareil électronique de manière intelligente lors de l'enregistrement dudit nouvel appareil électronique.

5. Procédé selon la revendication 4, comprenant en outre la mise en contact du serveur de diagnostic (222) pour récupérer des informations relatives à la signature actuelle transitoire et la signature actuelle stable pour le nouvel appareil électronique lorsque l'au moins une signature actuelle transitoire et signature actuelle stable pour l'au moins un appareil électronique ne sont pas situées sur la passerelle d'énergie domestique (218).

6. Procédé selon la revendication 1, **caractérisé en ce que** les paramètres électriques prédéfinis dudit au moins un appareil électronique comprennent en outre au moins une valeur nominale de courant et de tension électriques.

7. Procédé selon la revendication 1, dans lequel l'au moins un appareil électronique enregistré est balayé en continu par la passerelle d'énergie domestique, la passerelle d'énergie domestique (218) étant avertie, lors de la mise en service de l'au moins un appareil électronique, de l'échantillonnage de l'au moins une signature actuelle transitoire et de la signature actuelle stable de l'au moins un appareil électronique et de l'échantillonnage de la signature actuelle stable de l'au moins un appareil électronique à intervalle de temps périodique.

8. Procédé selon la revendication 1, comprenant en outre le rapport d'un état de santé diagnostiqué de l'au moins un appareil électronique sur un dispositif d'affichage.

9. Procédé selon la revendication2, **caractérisé en ce que** l'au moins une signature actuelle transitoire et signature actuelle stable de l'appareil électronique sont analysées par comparaison de l'au moins une signature actuelle transitoire et signature actuelle stable de l'appareil électronique avec les paramètres électriques prédéfinis dudit au moins un appareil électronique.

10. Procédé selon la revendication2, comprenant en outre la recherche de détails de contact du centre de service des appareils électroniques par le serveur de diagnostic (222) par raccordement à un serveur de pages jaunes (224) sur l'Internet et par envoi des détails de contacts recherchés à la passerelle d'énergie domestique (218) pour étendre l'affichage sur le dispositif d'affichage.

11. Procédé selon la revendication 1, comprenant en outre la génération et l'envoi à l'utilisateur d'un SMS ou d'un courrier électronique concernant l'état de santé diagnostiqué de l'appareil électronique.

12. Procédé selon la revendication2, comprenant en outre l'envoi, d'un dispositif de communication mobile de l'utilisateur (228) au serveur de diagnostic (222), d'une requête relative à un état de santé actuel dudit au moins un appareil électronique.

13. Système de surveillance de l'état de santé d'une pluralité d'appareils électroniques, le système comprenant :
une passerelle d'énergie domestique (218) adaptée pour
faciliter l'enregistrement de l'au moins un appareil électronique de la pluralité d'appareils électroniques auprès d'un serveur de diagnostic (222) par fourniture de paramètres électriques prédéfinis de l'au moins un appareil électronique ;
**caractérisé en ce qu'**il est adapté pour
échantillonner une signature actuelle transitoire de l'au moins un appareil électronique lorsque ledit au moins un appareil électronique est en service à haute fréquence pour déterminer un écart subtil de la caractéristique dudit au moins un appareil électronique ;
échantillonner une signature actuelle stable de l'au moins un appareil électronique lorsque l'au moins un appareil électronique est en état de fonctionnement stable ; et
analyser la signature actuelle transitoire et la signature actuelle de l'au moins un appareil électronique par comparaison avec des paramètres électriques prédéfinis de l'au moins un appareil électronique pour trouver une anomalie dans la signature actuelle transitoire et la signature actuelle stable, le cas échéant pour diagnostiquer un état de santé de l'au moins un appareil électronique en fonction de l'anomalie détectée.

14. Système selon la revendication 13, dans lequel le système comprend en outre un dispositif d'affichage adapté pour afficher l'état de santé de l'au moins un appareil électronique, le dispositif d'affichage comprenant un téléviseur, un téléphone intelligent, un téléphone mobile, un ordinateur portable, un ordinateur de bureau.

15. Système selon la revendication 13, dans lequel ledit au moins un appareil électronique comprend en outre un climatiseur (202), une machine à laver (204), un réfrigérateur (206), un téléviseur et un four à micro-ondes.
